# EUROPEAN PATENT SPECIFICATION

(11) **EP 3 523 122 B1**
(45) Date of publication and mention of the grant of the patent: **06.01.2021**
(21) Application number: 17808303.6
(22) Date of filing: 04.10.2017
(51) Int. Cl.: D01D 5/00, B32B 5/26, B01D 39/16, B32B 5/02, B32B 7/06, B32B 9/04, B32B 27/10, B32B 29/02, B32B 7/12, B32B 9/02, B32B 9/06, B32B 15/08, B32B 29/00, B32B 27/12, B32B 15/14, B32B 15/12

(54) **METHOD FOR DEPOSITING A LAYER OF POLYMERIC NANOFIBERS PREPARED BY ELECTROSTATIC SPINNING OF A POLYMER SOLUTION OR MELT ON ELECTRICALLY NONCONDUCTIVE MATERIALS, AND A MULTILAYER COMPOSITE THUS PREPARED CONTAINING AT LEAST ONE LAYER OF POLYMERIC NANOFIBERS**
VERFAHREN ZUM DEPONIEREN EINER SCHICHT AUS POLYMERNANOFASERN, DIE DURCH ELEKTROSTATISCHES SPINNEN EINER POLYMERLÖSUNG ODER SCHMELZE AUF ELEKTRISCH NICHTLEITFÄHIGE MATERIALIEN HERGESTELLT WURDE, SOWIE EIN MULTILAYER COMPOSIT, DAS SOWEIT EINE SCHICHT VON POLYMERNANOFASERN ENTHALTET
PROCÉDÉ DE DÉPÔT D'UNE COUCHE DE NANOFIBRES POLYMÈRES PRÉPARÉS PAR FILATURE ÉLECTROSTATIQUE D'UNE SOLUTION OU D'UNE UNE MASSE FONDUE DE POLYMÈRE SUR DES MATÉRIAUX ÉLECTRIQUEMENT NON CONDUCTEURS, ET COMPOSITE MULTICOUCHE AINSI PRÉPARÉ CONTENANT AU MOINS UNE COUCHE DE NANOFIBRES POLYMÈRES

(30) Priority: 06.10.2016 CZ 20160622
(43) Date of publication of application: 14.08.2019
(73) Proprietor: NAFIGATE Corporation, a.s., 190 00 Praha 9 (CZ)
(72) Inventor: MARES, Ladislav, 460 10 Liberec Liberec XX - Ostasov (CZ); YALCINKAYA, Baturalp, 460 01 Liberec (CZ)
(74) Representative: Musil, Dobroslav
(86) International application number: PCT/CZ2017/050047
(87) International publication number: WO 2018/064992

(56) References cited:
- WO-A2-2008/106903
- US-A1- 2008 216 205
- US-A1- 2013 248 463
- US-A1- 2016 256 806

## Description

### Technical field

The invention relates to a method for depositing a layer of polymeric nanofibers prepared by electrostatic spinning of a polymer solution or melt on electrically nonconductive materials.

The invention also relates to a multilayer composite thus prepared containing at least one layer of polymeric nanofibers.

### Background art

At present, electrostatic spinning is the most widespread method for producing polymeric nanofibres, wherein polymeric nanofibers are formed by the force of an electric field created between at least one spinning electrode and at least one collecting electrode acting on a polymer solution or melt. During electrostatic spinning, the nanofibers thus formed are deposited on a suitable substrate material on whose surface they gradualy form a planar layer. This layer then usually remains on the substrate material not only during subsequent handling operations, but also during its end use, when the substrate material provides the necessary support to the layer and, if necessary, also provides protection against mechanical damage. From the point of view of the end use of the layer of polymeric nanofibres, a suitable substrate material is especially a layer of fabric, paper, plastic foil or a grid/a net, a glass fiber net, etc.

However, the drawback of these substrate materials is the fact that they are usually electrically nonconductive. Because of this, during electrostatic spinning the electrical charge of the deposited nanofibers is concetrated on the substrate materials, thereby weakening and disrupting the electric field in which the electrostatic spinning takes place, and the substrate material gradually repels the newly supplied nanofibers having the same electrical polarity. This results not only in the deterioration of spinning and the reluctance of the nanofibers to be deposited on the given substrate material, but also in the reduced uniformity of the nanofibrous layer being formed and the increased diameter of the nanofibers being produced.

To overcome this problem, several different solutions based on different approaches have been proposed over the years. For example, CZ 305244 discloses a method for producing polymeric nanofibres by electrostatic spinning in which the electrical conductivity of the applied substrate is at least temporarily increased by using an electrically conductive fluid, thereby allowing the discharge of the electrical charge of the nanofibers deposited on the substrate material. The disadvantage of this process is that it is extremely challenging from the technological point of view. Another drawback is the fact that application of electrically conductive fluid is not suitable for mostsubstrate materials under consideration, since it may change the mechanical properties of the material (e.g. change the stiffness of the fabric) or damage it (e.g., soaking of the paper), or it is not possible to apply the electrically conductive fluid to the substrate material in a required amount, e.g., due to the structure of this substrate material (e.g., if the substrate material is formed by a grid or a net, etc.).

Furthermore, CZ 2007-108 discloses a method for producing polymeric nanofibers in which electric charge is applied to the used substrate material e.g., from a corona emitter prior to the deposition of nanofibers, whereby this electric charge subsequently neutralizes the electric charge of the oppositely charged nanofibers, which are deposited on this substrate, the electric charge applied to the substrate material being consumed during this process. However, practical tests have shown that this procedure is essentially unusable, mainly because the function of the corona emitter cannot be controlled and therefore the application of the charge is as a matter of fact random, and so it is not possible to achieve a long-term and at the same time uniform deposition.

In addition, CZ 2007-728 describes the use of a collecting electrode provided with tips which penetrate to the substrate material (or through its entire thickness) during electrostatic spinning and thus contribute to the process of electrostatic spinning and deposition of the nanofibers on electrically nonconductive substrate materials when the nanofibers being formed are attracted to these tips. Subsequently, the tips get out from the substrate material and the nanofibers remain deposited on its surface. This procedure, too, is technologically extremely challenging and does not lead to the formation of a uniform layer of polymeric nanofibers, since the nanofibers cluster in the vicinity of the individual tips. Moreover, this procedure can be used only for porous substrate materials, such as fabrics, while for other substrate materials, e.g., paper, foil, etc., it is fundamentally totally unusable.

Another example of a multilayer composite material containing nanofibers is found in US2013/248463 which discloses a method for fabricating a micro- or nanofibrous filter which provides a first carrier substrate with adhesive on one side and heating the adhesive up to or above its melting temperature and below the melting temperature of the at least first carrier substrate to induce an interaction of the adhesive with the at least first carrier substrate and thereafter providing a layer of micro- or nanofibres on the adhesive side of the at least one adhesive carrier substrate to form a further structure.

WO2008/106903 describes a device for the production of nanofibres and/or nanoparticles from solutions or melts of polymers in an electrostatic field between at least one spinning electrode and at least one collecting electrode, through which there is guided sufficient electrically conductive substrate material, where the collecting electrode is in contact with the substrate material.

The goal of the invention is therefore to propose a method for depositing polymeric nanofibers prepared by electrostatic spinning of a polymer solution or melt on electrically nonconductive materials, which would have the least possible interference with the electric field for spinning and thus, regardless of the properties of the material used, the highest uniformity of the deposited layer of polymeric nanofibers would be achieved.

In addition, the goal of the invention is a multilayer composite which would contain at least one layer of polymeric nanofibers deposited on an electrically nonconductive material.

### Principle of the invention

The aim of the invention is achieved by a method for depositing a layer of polymeric nanofibers prepared by electrostatic spinning of a polymer solution or melt on electrically nonconductive materials, whose principle consists in that during the electrostatic spinning of a polymer solution or melt, the layer of polymeric nanofibers is deposited on a discontinuous layer of hot melt adhesive having a basis weight of 2 to 30 g/m², preferably between 3 and 15 g/m², which is deposited on an electrically conductive substrate material, and then the layer of polymeric nanofibers is covered by an electrically nonconductive material. Subsequently, the composite thus prepared is laminated at a pressure of 10 to 15 N/cm² and at an elevated temperature which is higher than the softening temperature of the hot melt adhesive and at the same time lower than the softening temperature of the polymeric nanofibers, whereby the hot melt adhesive during the lamination is transformed into a plastic or liquid state and penetrates through the entire thickness of the layer of the polymeric nanofibers to the surface and/or to the inner structure of the electrically nonconductive material and after stiffening, the hot melt adhesive attaches the layer of the polymeric nanofibers to this electrically nonconductive material and at the same time reinforces the layer of polymeric nanofibers.

In case of need, e.g., in the production of battery separators, another layer of polymeric nanofibers is deposited on the opposite surface of the electrically nonconductive material before or after the lamination, the layer of polymeric nanofibers being deposited on a discontinuous layer of hot melt adhesive having a basis weight of 2 to 30 g/m², which is deposited on an electrically conductive substrate material. Afterwards, the composite thus prepared is laminated at a pressure of 10 to 15 N/cm² and at an elevated temperature which is higher than the softening temperature of the hot melt adhesive and at the same time lower than the softening temperature of the polymeric nanofibers in both layers of polymeric nanofibers.

The hot melt adhesive has been already deposited on an electrically conductive substrate material (e.g., from production), or it is deposited on it prior to the deposition of the layer of polymeric nanofibers in the form of a regular or irregular net of point and/or linear and/or planar formations and/or fibers.

The layer of polymeric nanofibers can be deposited on the discontinuous layer of the hot melt adhesive before or after the adhesive stiffens.

The electrically nonconductive substrate, which is preferably made from the so-called transfer materials, such as silicone paper (siliconized at least on one side) or silicone foil, etc., is during the lamination removed at least from one layer of polymeric nanofibers, or, on the contrary, it remains on the layer, protecting it from mechanical damage until it is further processed or until the end use of the composite thus prepared.

The layer of polymeric nanofibers according to the intended use of the finished composite has a basis weight usually in the range from 0.01 to 5 g/m².

A suitable electrically nonconductive material, on which the layer of the polymeric nanofibers is deposited, is, e.g., a glass fiber net or nonwoven fabric.

The aim of the invention is further achieved by a multilayer composite containing at least one layer of polymeric nanofibers, whose principle consists in that the layer of polymeric nanofibers is deposited on an electrically nonconductive material, to which it is attached by means of point and/or planar and/or linear formations and/or fibers of hot melt adhesive, and on its opposite surface it is covered by an electrically conductive substrate material, which is removably deposited on it.

If necessary, another layer of polymeric nanofibers is deposited on the opposite surface of the electrically nonconductive material, the layer being attached to it by means of point and/or planar and/or linear formations and/or fibers of the hot melt adhesive. This layer is preferably covered by an electrically conductive substrate material, which is removably deposited on it.

A suitable electrically conductive substrate material is especially silicone paper (siliconized at least on one side) or silicone foil.

A suitable electrically nonconductive material is a glass fiber net (e.g. for the production of window mesh screens according to CZ 305907) or nonwoven fabric (e.g. for the production of filters or battery separators).

### Description of drawings

In the enclosed drawing, Figs. 1a to 1c schematically represent cross-sections of intermediate products of the individual steps of the method for depositing polymeric nanofibers produced by electrostatic spinning of a polymer solution or polymer melt on electrically nonconductive materials according to the invention, and Fig. 1d shows a cross-section of the composite thus prepared, which contains at least one layer of polymeric nanofibers. Figs. 2a and 2b show SEM images of two cross-sections of one variant of the composite prepared by the method according to the invention at 250 and 70 times magnification, Fig. 3 shows a SEM image of the second variant of the composite prepared by the method according to the invention at 117 times magnification, Figs. 4a and 4b show SEM images of two cross-sections of the third variant of the composite prepared by the method according to the invention at 1500 times magnification, Fig. 5 is a SEM image of a cross-section of the fourth variant of the composite prepared by the method according to the invention at 1100 times magnification, Fig. 6 is a SEM image of a cross-section of the fifth variant of the composite prepared by the method according to the invention at 1160 times magnification, Fig. 7 is a SEM image of a cross-section of the sixth variant of the composite prepared by the method according to the invention at 702 times magnification, na Fig. 8 shows a SEM image of a cross-section of the seventh variant of the composite prepared by the method according to the invention at 1500 times magnification and Fig. 9 shows a SEM image of a cross-section of the eighth variant of the composite produced by the method according to the invention at 1000 times magnification.

### Examples of embodiment

In the method of depositing polymeric nanofibers prepared by electrostatic spinning of a polymer solution or melt on electrically nonconductive materials according to the invention, at first a planar electrically conductive substrate material 1 is used, such as metal foil, fabric with antistatic treatment, etc., whereby the most suitable substrate materials are the so-called transfer materials because of their low surface tension, e.g., silicone paper (siliconized at least on one side) or silicone foil, etc.

A discontinuous layer 2 of hot melt adhesive having a softening temperature lower that the softening temperature of the polymeric nanofibers to be produced has been deposited on the surface of an electrically conductive substrate material 1 already during its production or the layer 2 is applied to its surface, e.g., by spraying, by means of coating cylinder, by electrostatic spraying or spinning, or using another known method. This discontinuous layer 2 may, for example, have the form of any matrix or pattern, or the form of an irregular net or mesh of point and/or linear and/or planar formations of the particular hot melt adhesive (or adhesives), and/or a discontinuous layer of the fibers of the particular adhesive (adhesives), its basis weight ranging according to the requirements and the intended application of the prepared product from 2 to 30 g/m², preferably from 3 to 15 g/m². Suitable hot melt adhesive is, e.g., copolyamide, copolyester, polyurethane, etc.

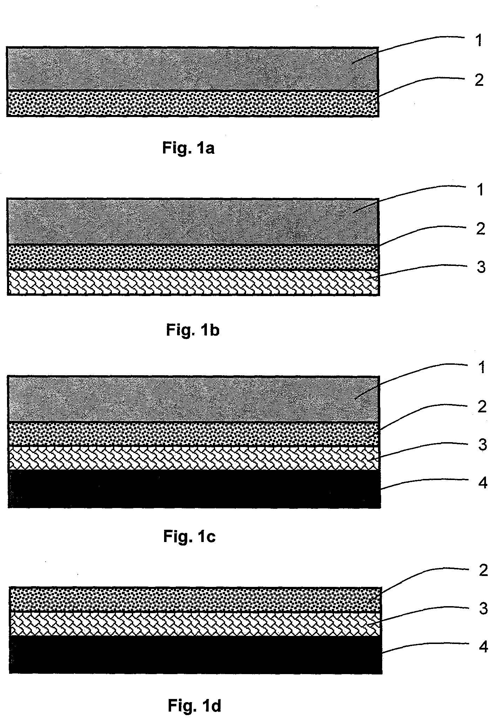

Either before the hot melt adhesive stiffens or after it stiffens, the intermediate product thus prepared (see Fig. 1a) is fed to the spinning space of a known device for production of nanofibers by electrostatic spinning of a polymer solution or melt. The most suitable type of this device is a device which operates on the principle of the so-called nozzle-less electrostatic spinning, in which the polymer solution or melt is spun from the surface of at least one spinning electrode of elongated shape, for example, in the shape of a cylinder (see, e.g., EP 1673493) or a cord (see, e.g., EP 2059630 or EP 2173930), since in this case a higher uniformity of the layer of polymeric nanofibers being formed is usually achieved. This principle is commercially applied in the technology Nanospider™ of the corporation Elmarco. However, it is also possible to use another device for electrostatic spinning, e. g., a device using a spinning electrode of a different design and based on a different principle, including a device for the so-called nozzle spinning, when the electrode has a shape of a nozzle or a capillary, etc. In any case, during electrostatic spinning the layer 3 of polymeric nanofibers having a desired thickness, or, optionally, a desired basis weight (see Fig. 1b) is applied to the layer 2 of the hot melt adhesive. The basis weight of the layer 3 of polymeric nanofibers is determined especially by the intended application of the product being prepared, ranging, for example, from 0.0005 to 2 g/m² for a window mesh screen preventing penetration of insects and mechanical and biological impurities (e.g. according to CZ 305907), and in the range from 0.1 to 5 g/m² for a water filter (e.g. according to CZ 297697) or for a material for sound absorption (e.g. according to CZ 2007-27), etc. Preferably, the basis weight of the layer 3 of polymeric nanofibers is in the range from 1 to 5 g/m²; but if necessary, it may be even higher.

Afterwards, the layer 3 of polymeric nanofibers deposited on the electrically conductive substrate material 1 is covered by the required electrically nonconductive material 4, such as fabric, paper, leather, plastic foil or a mesh/net, a glass fiber net, etc., by which means a four-layer intermediate product is prepared (see, e.g., Fig. 1c). This intermediate product is subsequently subjected to lamination at elevated pressure and temperature at which the hot melt adhesive deposited on the substrate material 1 softens, whereby this adhesive due to the elevated pressure penetrates through the entire thickness of the layer 3 of the polymeric nanofibers to the surface and, possibly, also to the inner structure of the electrically nonconductive material **4**. As a result, after the adhesive stiffens, the layer **3** of polymeric nanofibers and the electrically nonconductive material **4** are attached to each other and, at the same time, the layer **3** of polymeric nanofibers is reinforced by the hot melt adhesive. If necessary, during the lamination the electrically conductive substrate material **1** is separated from the layer **3** of polymeric nanofibers, since the hot melt adhesive generally does not penetrate into its structure (see Fig. 1d), and whose separation is therefore gentle and does not damage the layer **3** of polymeric nanofibers. In another variant, the electrically conductive substrate material **1** may remain deposited on the layer **3** of polymeric nanofibers until this layer is used or further processed, and protect it from mechanical damage.

In any case, lamination takes place at a temperature which is lower than the softening temperature of the used polymeric nanofibers and at a pressure of 10 to 15 N/cm², by which means it is ensured that the layer **3** of the polymeric nanofibers retains its initial morphology. Apart from being applied to the electrically conductive substrate material **1,** the hot melt adhesive for the lamination can be applied to any other layer, optionally even to,more than one layer of the composite being formed.

If necessary, after the removal of the electrically conductive substrate material **1,** it is possible to deposit on the free surface **3** of the polymeric nanofibers at least one additional layer of material (electrically conductive or non-conductive), which will protect the layer **3** of polymeric nanofibers from mechanical damage or will provide the composite thus formed by required properties and/or parameters. To attach this layer (these layers) to the layer **3** of polymeric nanofibers, a layer of hot melt adhesive (preferably discontinuous) is used advantageously, followed by the lamination at elevated temperature and pressure.

In another variant of embodiment, before or after the lamination, on the opposite surface of the electrically nonconductive material **4** is deposited another layer **3** of the polymeric nanofibers, which may be the identical to the first layer **3** of polymeric nanofibers, or it may differ from it in the material of the nanofibers and/or in their diameter and/or in its basis weight and/or in the thickness and/or by addition an additive/additives. This additional layer **3** of polymeric nanofibers is preferably deposited on a discontinuous layer **2** of hot melt adhesive having a basis weight of 2 to 30 g/m², the discontinuous layer **2** of hot melt adhesive being deposited on an electrically conductive substrate material **1,** preferably on silicone paper or foil. After that the composite thus prepared is laminated (again) at a pressure of 10 to 15 N/cm² and at an elevated temperature which is higher than the softening temperature of the hot melt adhesive and at the same time lower than the softening temperature of the polymeric nanofibers in both layers **3** of polymeric nanofibers, by which means a composite is prepared, which contains as a carrier layer an electrically nonconductive material **4**, on whose both surfaces is deposited a layer **3** of polymeric nanofibers, which is attached to it in a resistant manner by means of point and/or planar and/or linear formations and/or fibers of the hot melt adhesive. During the lamination, it is possible to remove the electrically conductive substrate material **1** from at least one layer **3** of polymeric nanofibers.

With appropriate selection of material, as well as with appropriate selection of the parameters of the individual layers, it is possible for the hot melt adhesive from at least one discontinuous layer **2** of the hot melt adhesive to penetrate during the lamination through the entire thickness of the electrically nonconductive material **4** to the surface and possibly even to the inner structure of the layer **3** of polymeric nanofibers deposited on its opposite surface. In that case the resistance of the attachment between the individual layers is even higher.

Listed below for clarity are specific examples of depositing layers of polymeric nanofibers prepared by using electrostatic spinning of a polymer solution on electrically nonconductive materials **4** by the method according to the invention: These examples mention polymeric nanofibers made from polyvinylidene difluoride, polyurethane, polyacrylonitrile and polyamide 6, but it is evident that also nanofibers prepared from a polymer solution or melt of another polymer which can be spun by electrostatic spinning, or a mixture of polymers can be applied in the same manner to the electrically nonconductive materials **4**.

### Example 1

A discontinuous layer **2** of copolyester in the form of fibers having a basis weight of 4 g/m² was applied to the siliconized surface of silicone paper. After this adhesive solidified, a layer **3** of polyvinylidene difluoride nanofibers having a diameter of nanofibers of 120 ± 20 nm and a basis weight of 1 g/m² was applied to it by electrostatic spinning using the Nanospider™ technology. Electrostatic spinning took place at a temperature of 22 °C and a humidity of 16 %, the voltage difference between the spinning electrode (formed by a metal cord according to EP 2059630) and the collecting electrode (also formed by a metal cord) being 60 kV. Afterwards the thus formed layer **3** of polymeric nanofibers deposited on the silicone paper was covered by an electrically nonconductive glass fiber net and the intermediate product thus prepared was laminated at a temperature of 125 °C (the softening temperature of copolyester is 110 °C, the softening temperature of polyvinylidene difluoride is 170 °C) and at a pressure of 10 N/cm². During the lamination, the layer **3** of polyvinylidene difluoride nanofibers and the glass fiber net were attached to each other by means of copolyester and the silicone paper was removed from it.

Thus, a window mesh screen was created according to CZ 305907 against penetration of insects and mechanical and biological contaminants found in the air. According to the results of the tests, the hot melt adhesive layer did not significantly reduce the transparency of the net or increase its presure drop, neither did it limit its filter efficiency. Its pressure drop was 11 Pa, its filter efficiency was over 80 % for particles of 2 microns and over 50 % for particles of 0.4 micron.

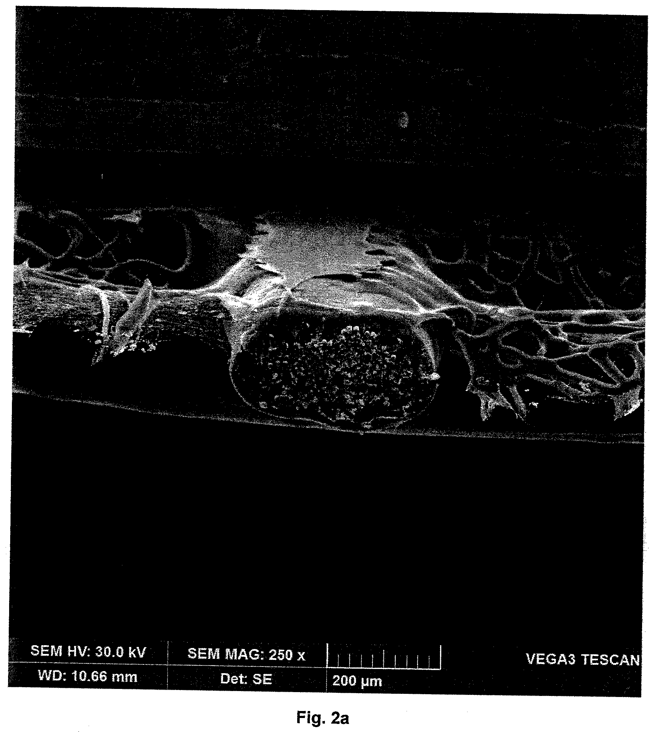

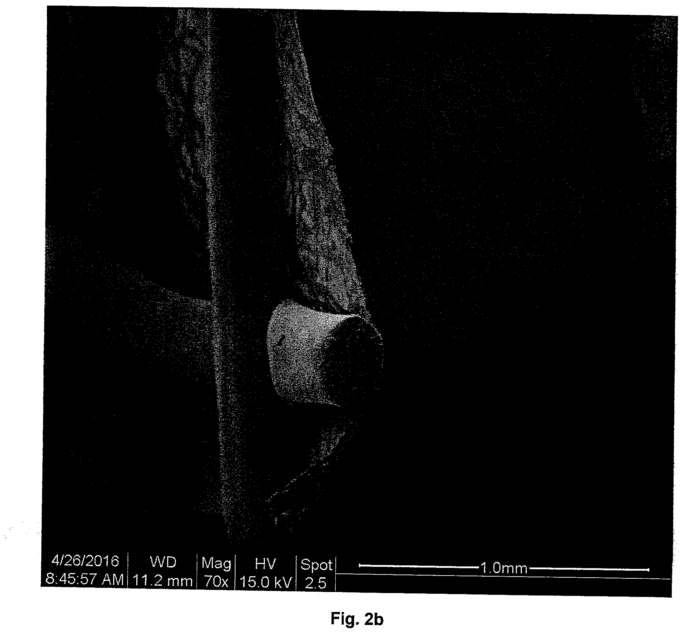

Figs. 2a and 2b are SEM images of two cross-sections of this composite at 250 times and 70 times magnification, in which the layer of polyvinylidene difluoride nanofibers deposited on the surface of the glass fiber net can be clearly seen.

### Example 2

A discontinuous layer **2** of polyurethane in the form of a net of planar formations having an overall basis weight of 6 g/m² was applied to the siliconized surface of silicone paper. After this adhesive solidified, a layer **3** of polyvinylidene difluoride nanofibers having a diameter of nanofibers of 120 ± 20 nm and a basis weight of 2 g/m² was applied to it by electrostatic spinning using the Nanospider™ technology. Electrostatic spinning took place at a temperature of 23 °C and a humidity of 18 %, the voltage difference between the spinning electrode (formed by a metal cord according to EP 2059630) and the collecting electrode (also formed by a metal cord) being 65 kV. After that the thus formed layer **3** of the polymeric nanofibers deposited on the silicone paper, it was covered by nonwoven point-bonded polyester fabric having a basis weight of 120 g/m², and the intermediate product thus prepared was laminated at a temperature of 125 °C and a pressure of 12 N/cm². During the lamination, the layer **3** of polyvinylidene difluoride nanofibers and the polyethylen nonwoven fabric were attached to each other by means of polyurethane and the silicone paper was removed from it.

Thus was prepared a composite containing as a carrier layer an electrically nonconductive nonwoven fabric, on whose surface the layer **3** of polyvinylidene difluoride nanofibers is deposited in a resistant manner.

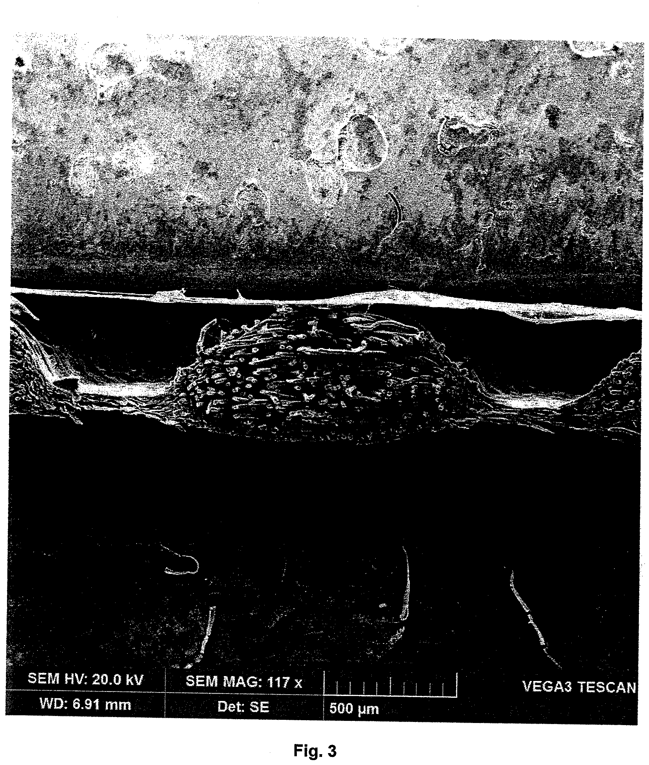

Fig. 3 shows a SEM image of a cross-section of this composite at 117 times magnification, in which the layer of polyvinylidene difluoride nanofibers deposited on the surface of the nonwoven polyester fabric can be clearly seen.

### Example 3

A discontinuous layer **2** of copolyester in the form of fibers having a basis weight of 6 g/m² was applied to the siliconized surface of silicone paper. After this adhesive solidified, a layer **3** of polyvinylidene difluoride nanofibers having a diameter of nanofibers of 120 ± 20 nm and a basis weight of 2 g/m² was applied to it by electrostatic spinning using the Nanospider™ technology. Electrostatic spinning took place at a temperature of 23 °C and a humidity of 18 %, the voltage difference between the spinning electrode (formed by a metal cord according to EP 2059630) and the collecting electrode (also formed by a metal cord) being 65 kV. Subsequently, the formed layer **3** of polymeric nanofibers deposited on the silicone paper was covered by an area bonded polyester fabric having a basis weight of 120 g/m², and the intermediate product thus prepared was laminated at a temperature of 125 °C and a pressure of 12 N/cm². During the lamination, the layer **3** of polyvinylidene difluoride nanofibers and the nonwoven polyethylene fabric were attached to each other by means of copolyester and the silicone paper was removed from it.

Thus was prepared a composite containing as a carrier layer an electrically nonconductive nonwoven fabric, on whose surface the layer **3** of polyvinylidene difluoride nanofibers is deposited in a resistant manner. This composite can be used, for example, as a filter for cleaning water.

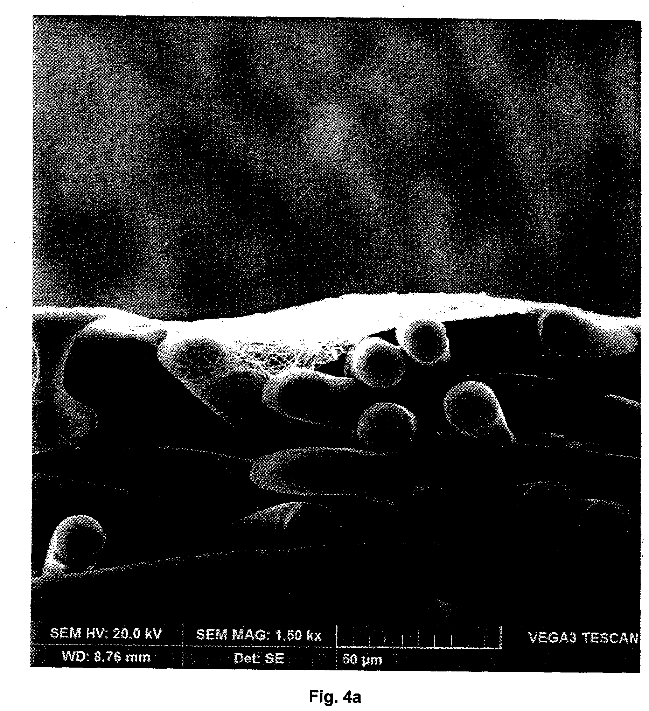

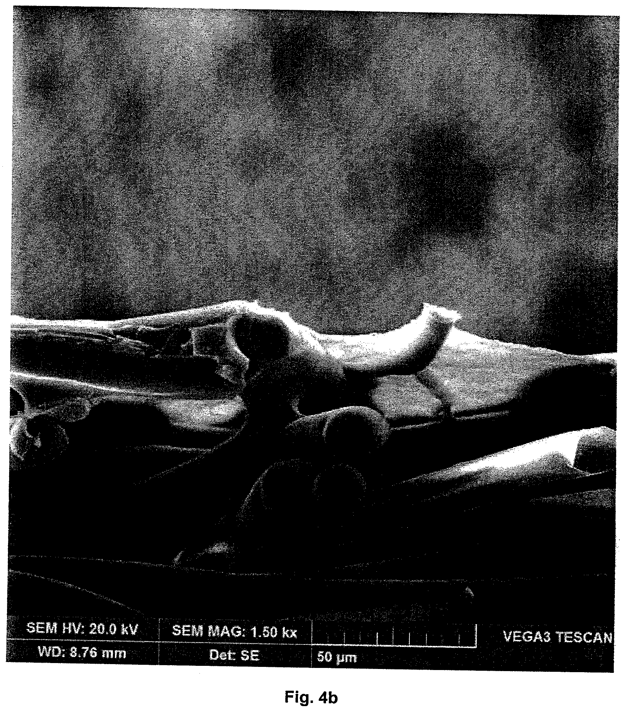

Figs. 4a and 4b show SEM images of two cross-sections of this composite at 1500 times magnification, in which the layer of polyvinylidene difluoride nanofibers deposited on the surface of the nonwoven fabric can be clearly seen.

### Example 4

A discontinuous layer **2** of copolyamide in the form of a regular grid formed by linear formations having an overall basis weight of 5 g/m² was applied to the siliconized surface of silicone paper. After this adhesive solidified, a layer **3** of polyurethane nanofibers having a diameter of nanofibers of 300 ± 50 nm and a basis weight 2.5 g/m² was applied to it by electrostatic spinning using the Nanospider™ technology. Electrostatic spinning took place at a temperature of 23 °C and a humidity of 18 %, the voltage difference between the spinning electrode (formed by a metal cord according to EP 2059630) and the collecting electrode (also formed by a metal cord) being 65 kV. Subsequently, the formed layer **3** of polymeric nanofibers deposited on the silicone paper was covered by a nonwoven polyester fabric, and the intermediate product thus prepared was laminated at a temperature of 135 °C and a pressure of 13.5 N/cm². During the lamination, the layer **3** of polyurethane nanofibers and the nonwoven polyester fabric were attached to each other by means of copolyamide and the silicone paper was removed from it.

Thus was prepared a composite containing as a carrier layer an electrically nonconductive nonwoven fabric, on whose surface the layer **3** of polyurethane nanofibers is deposited in a resistant manner.

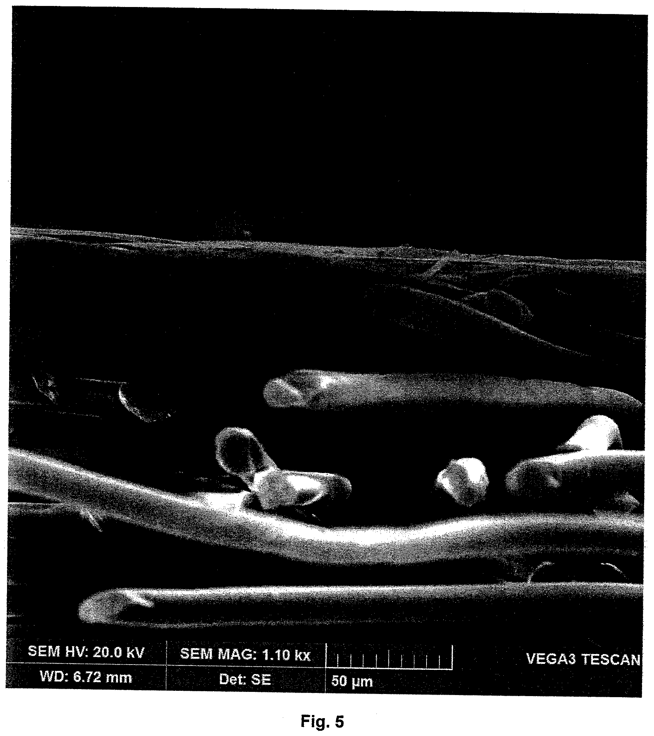

Fig. 5 shows a SEM image of a cross-section of this composite at 1100 times magnification, in which the layer of polyurethane nanofibers deposited on the surface of nonwoven polyester fabric can be clearly seen.

### Example 5

A discontinuous layer **2** of copolyamide in the form of fibers having a basis weight of 7 g/m² was applied to the siliconized surface of silicone paper. After this adhesive solidified, a layer **3** of polyvinylidene difluoride nanofibers having a diameter of nanofibers of 120 ± 20 nm and a basis weight of 3 g/m² was applied to it by electrostatic spinning using the Nanospider™ technology. Electrostatic spinning took place at a temperature of 23 °C and a humidity of 18 %, the voltage difference between the spinning electrode (formed by a metal cord according to EP 2059630) and the collecting electrode (also formed by a metal cord) being 65 kV. Afterwards, the formed layer **3** of polymeric nanofibers deposited on the silicone paper was covered by a nonwoven polyester fabric and the intermediate product thus prepared was laminated at a temperature of 135 °C and a pressure of 13 N/cm². During the lamination, the layer **3** of polyvinylidene difluoride nanofibers and the nonwoven polyester fabric were attached to each other by means of copolyamide.

Thus was prepared a composite containing as a carrier layer an electrically nonconductive nonwoven fabric, on whose surface the layer **3** of polyvinylidene difluoride nanofibers is deposited in a resistant manner.

### Example 6

A discontinuous layer **2** of copolyester in the form of fibers having a basis weight of 10 g/m² was applied to the siliconized surface of silicone paper. After this adhesive solidified, a layer **3** of polyurethane nanofibers having a diameter of nanofibers of 300 ± 50 nm and a basis weight of 4 g/m² was applied to it by electrostatic spinning using the Nanospider™ technology. Electrostatic spinning took place at a temperature of 23 °C and a humidity of 18 %, the voltage difference between the spinning electrode (formed by a metal cord according to EP 2059630) and the collecting electrode (also formed by a metal cord) being 65 kV. Subsequently, the formed layer **3** of polymeric nanofibers deposited on the silicone paper was covered by a nonwoven polyester fabric and the intermediate product thus prepared was laminated at a temperature of 125 °C and a pressure of 15 N/cm². During the lamination, the layer **3** of polyurethane nanofibers and the nonwoven fabric were attached to each other by means of copolyester.

Thus was prepared a composite containing as a carrier layer an electrically nonconductive nonwoven fabric, on whose surface is deposited in a resistant manner a layer **3** of polyurethane nanofibers.

### Example 7

A discontinuous layer **2** of copolyester in the form of fibers having a basis weight of 12 g/m² was applied to the siliconized surface of silicone paper. After this adhesive solidified, a layer **3** of polyvinylidene difluoride nanofibers having a diameter of nanofibers of 120 ± 20 nm and a basis weight of 4 g/m² was applied to it by electrostatic spinning using the Nanospider™ technology. Electrostatic spinning took place at a temperature of 23 °C and a humidity of 18 %, the voltage difference between the spinning electrode (formed by a metal cord according to EP 2059630) and the collecting electrode (also formed by a metal cord) being 65 kV. After that the formed layer **3** of polymeric nanofibers deposited on the silicone paper was covered by a nonwoven polyester fabric and the intermediate product thus prepared was laminated at a temperature of 120 °C and a pressure of 15 N/cm². During the lamination, the layer **3** of polyvinylidene difluoride nanofibers and the nonwoven fabric were attached to each other by means of copolyester.

Thus was prepared a composite containing as a carrier layer an electrically nonconductive nonwoven fabric, on whose surface a layer **3** of polyvinylidene difluoride nanofibers is deposited in a resistant manner.

### Example 8

A discontinuous layer **2** of copolyester in the form of fibers having a basis weight of 15 g/m² was applied to the siliconized surface of silicone paper. After this adhesive solidified, a layer **3** of polyurethane nanofibers having a diameter of nanofibers of 300 ± 50 nm and a basis weight of 5 g/m² was applied to it by electrostatic spinning using the Nanospider™ technology. Electrostatic spinning took place at a temperature of 22 °C and a humidity of 20 %, the voltage difference between the spinning electrode (formed by a metal cord according to EP 2059630) and the collecting electrode (also formed by a metal cord) being 65 kV. After that the formed layer **3** of polymeric nanofibers deposited on the silicone paper was covered by a nonwoven fabric from polyethylene terephthalate and the intermediate product thus prepared was laminated at a temperature of 125 °C and a pressure of 15 N/cm². During the lamination, the layer **3** of polyurethane nanofibers and the nonwoven fabric were attached to each other by means of copolyester.

Thus was prepared a composite containing as a carrier layer an electrically nonconductive nonwoven fabric, on whose surface a layer **3** of polyurethane nanofibers is deposited in a resistant manner.

### Example 9

A discontinuous layer **2** of copolyester in the form of an irregular net of point formations (drops) having a basis weight of 8 g/m² was applied to the siliconized surface of silicone paper. After this adhesive solidified, a layer **3** of polyvinylidene difluoride nanofibers having a diameter of nanofibers of 120 ± 20 nm and a basis weight of 4 g/m² was applied to it by electrostatic spinning using the Nanospider™ technology. Electrostatic spinning took place at a temperature of 22 °C and a humidity of 20 %, the voltage difference between the spinning electrode (formed by a metal cord according to EP 2059630) and the collecting electrode (also formed by a metal cord) being 65 kV. Subsequently, the formed layer **3** of polymeric nanofibers deposited on the silicone paper was covered by a nonwoven polyester fabric and the intermediate product thus prepared was laminated at a temperature of 120 °C and a pressure of 15 N/cm². During the lamination, the layer **3** of polyvinylidene difluoride nanofibers and the nonwoven fabric were attached to each other by means of copolyester.

Thus was prepared a composite containing as a carrier layer an electrically nonconductive nonwoven fabric, on whose surface is deposited in a resistant manner a layer **3** of polyvinylidene difluoride nanofibers.

### Example 10

A discontinuous layer **2** of copolyester in the form of fibers having a basis weight of 13 g/m² was applied to the siliconized surface of silicone paper. After this adhesive solidified, a layer **3** of polyurethane nanofibers having a diameter of nanofibers of 300 ± 50 nm and a basis weight of 4 g/m² was applied to it by electrostatic spinning using the Nanospider™ technology. Electrostatic spinning took place at a temperature of 22 °C and a humidity of 20 %, the voltage difference between the spinning electrode (formed by a metal cord according to EP 2059630) and the collecting electrode (also formed by a metal cord) being 65 kV. Afterwards, the formed layer **3** of polymeric nanofibers deposited on the silicone paper was covered by a nonwoven polyester fabric and the intermediate product thus prepared was laminated at a temperature of 120 °C and a pressure of 15 N/cm². During the lamination, the layer **3** of polyurethane nanofibers and the nonwoven fabric were attached to each other by means of copolyester.

Thus was prepared a composite containing as a carrier layer an electrically nonconductive nonwoven fabric, on whose surface is deposited in a resistant manner a layer **3** of polyurethane nanofibers.

### Example 11

A discontinuous layer **2** of copolyester in the form of fibers having a basis weight of 23 g/m² was applied to the siliconized surface of silicone paper. After this adhesive solidified, a layer **3** of polyurethane nanofibers having a diameter of nanofibers 300 ± 50 nm and a basis weight of 5 g/m² was applied to it by electrostatic spinning using the Nanospider™ technology. Electrostatic spinning took place at a temperature of 22 °C and a humidity of 20 %, the voltage difference between the spinning electrode (formed by a metal cord according to EP 2059630) and the collecting electrode (also formed by a metal cord) being 65 kV. After that the formed layer **3** of polymeric nanofibers deposited on the silicone paper was covered by a nonwoven polyester fabric and the intermediate product thus prepared was laminated at a temperature of 125 °C and a pressure of 15 N/cm². During the lamination, the layer **3** of polyurethane nanofibers and the nonwoven fabric were attached to each other by means of copolyester.

Thus was prepared a composite containing as a carrier layer an electrically nonconductive nonwoven fabric, on whose surface is deposited in a resistant manner a layer **3** of polyurethane nanofibers.

### Example 12

A discontinuous layer **2** of copolyester in the form of fibers having a basis weight of 27 g/m² was applied to the siliconized surface of silicone paper. After this adhesive solidified, a layer **3** of polyurethane nanofibers having a diameter of nanofibers of 300 ± 50 nm and a basis weight of 5 g/m² was applied to it by electrostatic spinning using the Nanospider™ technology. Electrostatic spinning took place at a temperature of 22 °C and a humidity of 20 %, the voltage difference between the spinning electrode (formed by a metal cord according to EP 2059630) and the collecting electrode (also formed by a metal cord) being 65 kV. After that the formed layer **3** of polymeric nanofibers deposited on silicone paper was covered by a nonwoven polyester fabric and the intermediate product thus prepared was laminated at a temperature of 125 °C and a pressure of 15 N/cm². During the lamination, the layer **3** of polyurethane nanofibers and the nonwoven fabric were attached to each other by means of copolyester.

Thus was prepared a composite containing as a carrier layer an electrically nonconductive nonwoven fabric, on whose surface is deposited in a resistant manner a layer **3** of polyurethane nanofibers.

### Example 13

A discontinuous layer **2** of copolyester in the form of an irregular net of point formations (drops) having a basis weight of 28 g/m² was applied to the siliconized surface of silicone paper. After this adhesive solidified, a layer **3** of polyvinylidene difluoride nanofibers having a diameter of nanofibers of 120 ± 20 nm and a basis weight of 4 g/m² was applied to it by electrostatic spinning using the Nanospider™ technology. Electrostatic spinning took place at a temperature of 22 °C and a humidity of 20 %, the voltage difference between the spinning electrode (formed by a metal cord according to EP 2059630) and the collecting electrode (also formed by a metal cord) being 65 kV. Subsequently, the formed layer **3** of polymeric nanofibers deposited on the silicone paper was covered by a nonwoven polyester fabric and the intermediate product thus prepared was laminated at a temperature of 120 °C and a pressure of 15 N/cm². During the lamination, the layer **3** of polyvinylidene difluoride nanofibers and the nonwoven fabric were attached to each other by means of copolyester.

Thus was prepared a composite containing as a carrier layer an electrically nonconductive nonwoven fabric, on whose surface is deposited in a resistant manner a layer **3** polyvinylidene difluoride nanofibers.

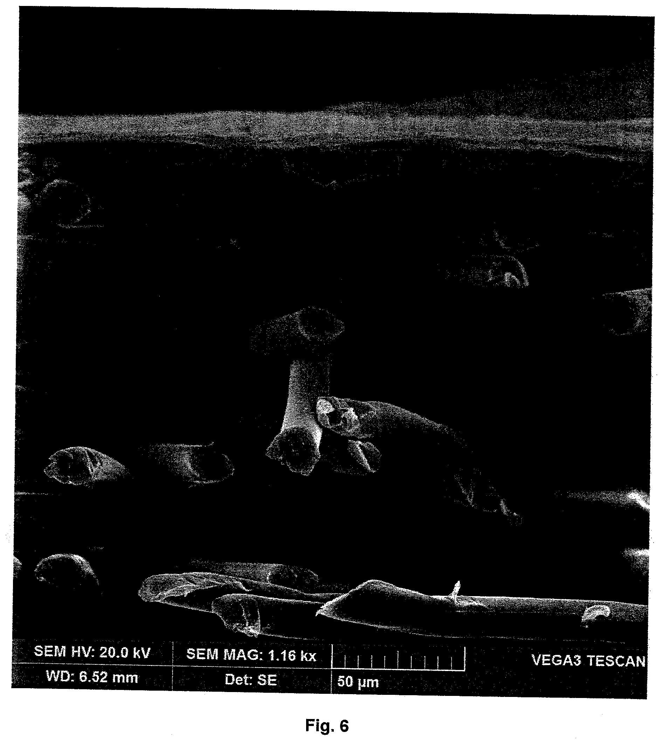

Fig. 6 shows a SEM image of a cross-section of this composite at 1160 times magnification, in which the layer of polyvinylidene difluoride nanofibers deposited on the surface of nonwoven polyester fabric can be clearly seen.

### Example 14

A discontinuous layer **2** of polyurethane in the form of fibers having a basis weight of 10 g/m² was applied to the siliconized surface of silicone paper. After this adhesive solidified, a layer **3** of polyacrylonitrile nanofibers having a diameter of nanofibers of 60 ± 10 nm and a basis weight of 3 g/m² was applied to it by electrostatic spinning using the Nanospider™ technology. Electrostatic spinning took place at a temperature of 22 °C and a humidity of 21 %, the voltage difference between the spinning electrode (formed by a metal cord according to EP 2059630) and the collecting electrode (also formed by a metal cord) being 65 kV. Afterwards, the formed layer **3** of polymeric nanofibers deposited on the silicone paper was covered by a nonwoven polyester fabric and the intermediate product thus prepared was laminated at a temperature of 120 °C and a pressure of 13 N/cm². During the lamination, the layer **3** of polyacrylonitrile nanofibers and the nonwoven fabric were attached to each other by means of polyurethane.

Thus was prepared a composite containing an electrically nonconductive nonwoven fabric as a carrier layer, on whose surface is deposited in a resistant manner a layer **3** of polyacrylonitrile nanofibers.

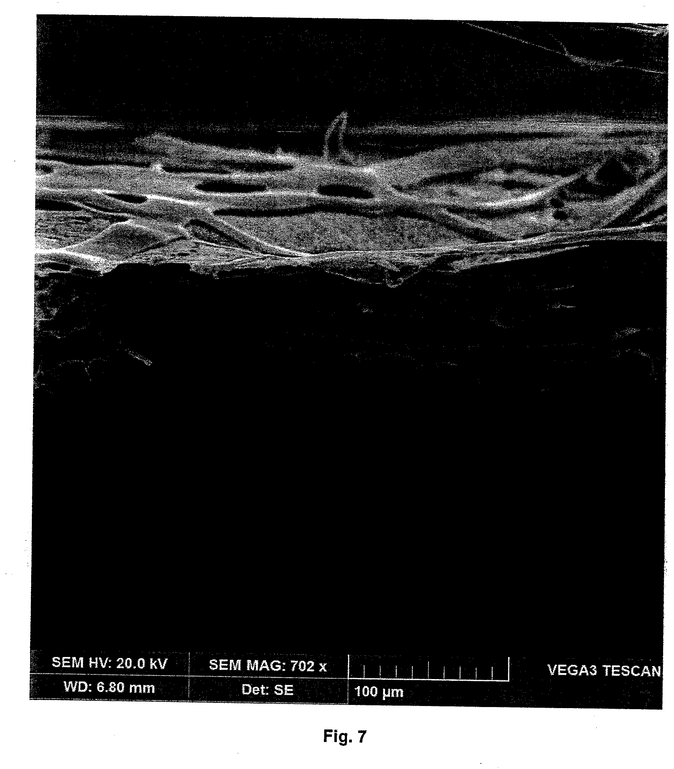

Fig. 7 shows a SEM image of a cross-section of this composite at 702 times magnification, in which the layer of polyacrylonitrile nanofibers deposited on the surface of the nonwoven polyester fabric can be clearly seen.

### Example 15

A discontinuous layer **2** of polyurethane in the form of a net of point formations (drops) with an overall basis weight of 7 g/m² was applied the siliconized surface of silicone paper After this adhesive solidified, a layer **3** of polyacrylonitrile nanofibers having a diameter of 60 ± 10 nm and a basis weight of 3.5 g/m² was applied to it by electrostatic spinning using the Nanospider™ technology. Electrostatic spinning took place at a temperature of 22 °C and a humidity of 21%, the voltage difference between the spinning electrode (formed by a metal cord according to EP 2059630) and the collecting electrode (also formed by a metal cord) being 65 kV. Subsequently, the formed layer 3 of polymeric nanofibers deposited on the silicone paper was covered by a nonwoven polyester fabric and the intermediate product thus prepared was laminated at a temperature of 125 °C and a pressure of 15 N/cm². During the lamination, the layer **3** of polyacrylonitrile nanofibers and the nonwoven fabric were attached to each other by means of polyurethane.

Thus was prepared a composite containing as a carrier layer an electrically nonconductive nonwoven fabric, on whose surface is deposited in a resistant manner a layer **3** of nanofibers of polyacrylonitrile.

### Example 16

A discontinuous layer **2** of copolyester in the form of fibers having a basis weight of 8 g/m² was applied to the siliconized surface of silicone paper. After this adhesive solidified, a layer **3** of nanofibers of polyamide 6 having a diameter of nanofibers of 50 ± 10 nm and a basis weight of 2 g/m² was applied to it by electrostatic spinning using Nanospider™ technology. Electrostatic spinning took place at a temperature of 22 °C and a humidity of 21 %, the voltage difference between the spinning electrode (formed by a metal cord according to EP 2059630) and the collecting electrode (also formed by a metal cord) being 65 kV. Afterwards, the formed layer **3** of polymeric nanofibers deposited on the silicone paper was covered by a nonwoven polyester fabric and the intermediate product thus prepared was laminated at a temperature of 120 °C and a pressure of 13 N/cm². During the lamination, the layer **3** of nanofibers of polyamide 6 was and the nonwoven fabric were attached to each other by means of copolyester.

Thus was prepared a composite containing an electrically nonconductive nonwoven fabric as a carrier layer, on whose surface is deposited in a resistant manner a layer **3** of nanofibers of polyamide 6.

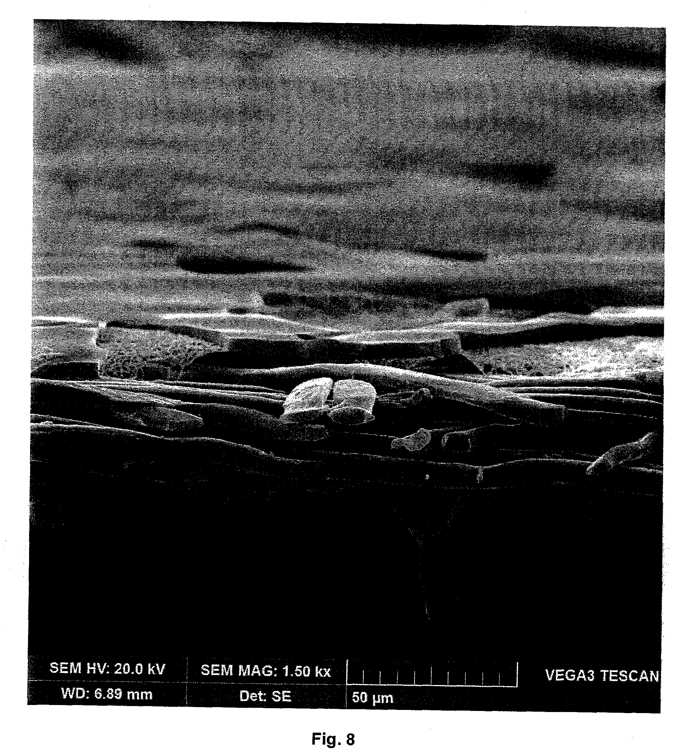

Fig. 8 shows a SEM image of across-section of this composite at 1500 times magnification, in which the layer of nanofibers of polyamide 6 deposited on the surface of the nonwoven polyester fabric can be clearly seen.

### Example 17

A discontinuous layer **2** of copolyester in the form of fibers having a basis weight of 12 g/m² was applied to the siliconized surface of silicone paper. After this adhesive solidified, a layer **3** of polyamide 6 nanofibers having a diameter of 50 ± 10 nm and a basis weight of 4.5 g/m² was applied to it by electrostatic spinning using the Nanospider™ technology. Electrostatic spinning took place at a temperature of 22 °C and a humidity of 21 %, the voltage difference between the spinning electrode (formed by a metal cord according to EP 2059630) and the collecting electrode (also formed by a metal cord) being 65 kV. After that the formed layer **3** of polymeric nanofibers deposited on the silicone paper was covered by a nonwoven polyester fabric and the intermediate product thus prepared was laminated at a temperature of 125 °C and a pressure of 15 N/cm². During the lamination, the layer **3** of polyamide 6 nanofibers and the nonwoven fabric were attached to each other by means of copolyester.

Thus was prepared a composite containing an electrically nonconductive nonwoven fabric as a carrier layer, on whose surface is deposited in a resistant manner a layer **3** of polyamide 6 nanofibers.

### Example 18

A discontinuous layer **2** of copolyester in the form of fibers having a basis weight of 4 g/m² was applied to the siliconized surface of silicone paper. After this adhesive solidified, a layer **3** of polyvinylidene difluoride nanofibers having a diameter of nanofibers of 120 ± 20 nm and a basis weight of 1 g/m² was applied to it by electrostatic spinning using Nanospider™ technology. Electrostatic spinning took place at a temperature of 22 °C and a humidity of 12 %, the voltage difference between the spinning electrode (formed by a metal cord according to EP 2059630) and the collecting electrode (also formed by a metal cord) being 60 kV.

After that the formed layer **3** of polymeric nanofibers deposited on silicone paper was covered by a nonwoven polypropylene fabric having a basis weight of 12 g/m² and the intermediate product thus prepared was laminated at a temperature of 100 °C and a pressure of 10 N/cm². During the lamination, the layer **3** of polyvinylidene difluoride nanofibers and the nonwoven fabric were attached to each other by means of copolyester.

A discontinuous layer **2** of copolyester in the form of fibers having a basis weight of 6 g/m² was applied to the siliconized surface of another silicone paper. After this adhesive solidified, a layer **3** of polyvinylidene difluoride nanofibers having a diameter of nanofibers of 120 ± 20 nm and a basis weight of 1 g/m² was applied to it by electrostatic spinning using the Nanospider™ technology. Electrostatic spinning took place at a temperature of 22 °C and a humidity of 12 %, the voltage difference between the spinning electrode (formed by a metal cord according to EP 2059630) and the collecting electrode (also formed by a metal cord) being 60 kV.

Subsequently, the intermediate product thus prepared was applied with the layer **3** of polyvinylidene difluoride nanofibers to the free surface of the nonwoven polypropylene fabric. During the following lamination at a temperature of 100 °C and a pressure of 10 N/cm² the layer **3** of polyvinylidene difluoride nanofibers was attached to a nonwoven fabric by means of copolyester, and both layers of the silicone paper were removed from the composite thus prepared.

Thus was prepared a three-layer composite containing as a carrier layer an electrically nonconductive nonwoven fabric, on whose both surfaces is deposited in a resistant manner a layer **3** of polyvinylidene difluoride nanofibers. This composite is applicable, e.g., as a battery separator.

### Example 19

A discontinuous layer **2** of copolyester in the form of fibers having a basis weight of 4 g/m² was applied to the siliconized surface of silicone paper. After this adhesive solidified, a layer **3** of polyvinylidene difluoride nanofibers having a diameter of nanofibers of 120 ± 20 nm and a basis weight of 1 g/m² was applied to it by electrostatic spinning using Nanospider™ technology. Electrostatic spinning took place at a temperature of 22 °C and a humidity of 12 %, the voltage difference between the spinning electrode (formed by a metal cord according to EP 2059630) and the collecting electrode (also formed by a metal cord) being 60 kV.

Subsequently, the formed layer **3** of polymeric nanofibers deposited on silicone paper was covered by a nonwoven polypropylene fabric having a basis weight of 12 g/m² and the intermediate product thus prepared was laminated at a temperature of 100 °C and a pressure of 10 N/cm². During the lamination, the layer **3** of polyvinylidene difluoride nanofibers and the nonwoven fabric were attached to each other by means of copolyester.

A discontinuous layer **2** of copolyester was applied to the silicon surface of another silicone paper in the form of fibers having a basis weight of 6 g/m². After this adhesive solidified, a layer **3** of polyvinylidene difluoride nanofibers having a diameter of nanofibers of 120 ± 20 nm and a basis weight of 2 g/m² was applied to the discontinuous layer **2** of copolyester by electrostatic spinning using the Nanospider™ technology. Electrostatic spinning took place at a temperature of 22 °C and a humidity of 12 %, the voltage difference between the spinning electrode (formed by a metal cord according to EP 2059630) and the collecting electrode (also formed by a metal cord) being 60 kV.

The intermediate product thus prepared was subsequently was applied with the layer **3** of polyvinylidene difluoride nanofibers to the free surface of the nonwoven polypropylene fabric. During the subsequent lamination at a temperature of 120 °C and a pressure of 15 N/cm² the layer **3** of polyvinylidene difluoride nanofibers was by means of copolyester attached to the nonwoven fabric, and both layers of the silicone paper were removed from the composite thus prepared.

Thus was created a three-layer composite containing as a carrier layer an electrically nonconductive nonwoven fabric, on whose both surfaces is deposited in a resistant manner a layer **3** of polyvinylidene difluoride nanofibers. This composite can be used, for example, as a battery separator.

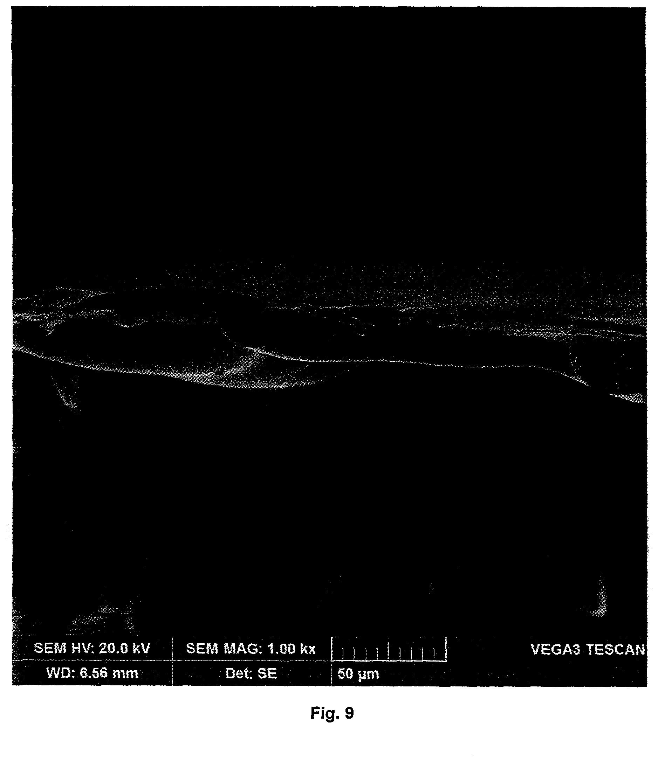

Fig. 9 shows a SEM image of a cross-section of this composite at 1000 times magnification, in which the layer of polyvinylidene difluoride nanofibers deposited on one surface of the nonwoven polypropylene fabric can be clearly seen.

### List of references

- 1: electrically conductive substrate material
- 2: discontinuous layer of hot melt adhesive
- 3: layer of polymeric nanofibers
- 4: electrically nonconductive material

## Claims

1. A method for depositing a layer (3) of polymeric nanofibers prepared by the electrostatic spinning of a polymer solution or melt on electrically nonconductive materials (4), **characterized in that** during the electrostatic spinning of a polymer solution or melt, the layer (3) of polymeric nanofibers is deposited on a discontinuous layer (2) of hot melt adhesive having a basis weight of 2 to 30 g/m² which is deposited on an electrically conductive substrate material (1) and afterwards it is covered by an electrically nonconductive material (4), whereupon the composite thus prepared is laminated at a pressure of 10 to 15 N/cm² and at an elevated temperature, which is higher than the softening temperature of the hot melt adhesive and at the same time lower than the softening temperature of the polymeric nanofibers, whereby during the lamination the hot melt adhesive is transformed into a plastic or liquid state and penetrates through the entire thickness of the layer (3) of polymeric nanofibers to the surface and/or to the inner structure of the electrically nonconductive material (4) and after solidifying it attaches the layer (3) of polymeric nanofibers to the electrically nonconductive material (4), at the same time reinforcing the layer (3) of polymeric nanofibers.

2. The method according to claim 1, **characterized in that** before or after the lamination, another layer (3) of polymeric nanofibers is deposited on the surface of an electrically nonconductive material (4), opposite the surface on which the first layer (3) of polymeric nanofibers was deposited, this additional layer being deposited on a discontinuous layer (2) of the hot melt adhesive having a basis weight of 2 to 30 g/m² which is deposited on an electrically conductive substrate material (1), whereupon the composite thus prepared is laminated at a pressure of 10 to 15 N/cm² and at an elevated temperature, which is higher than the softening temperature of the hot melt adhesive and at the same time lower than the softening temperature of polymeric nanofibers in both layers (3) of the polymeric nanofibers.

3. The method according to claim 1 or 2, **characterized in that** the hot melt adhesive has been deposited on the electrically conductive substrate material (1) in advance, or it is deposited on it in the form of a regular or irregular net of point and/or linear and/or planar formations and/or fibers.

4. The method according to claim 2 or 3, **characterized in that** the layer (3) of polymeric nanofibers is deposited on the discontinuous layer (2) of the hot melt adhesive after the adhesive solidifies.

5. The method according to claim 2 or 3, **characterized in that** the layer (3) of polymeric nanofibers is deposited on the discontinuous layer (2) of the hot melt adhesive before the adhesive solidifies.

6. The method according to claim 1 or 2, **characterized in that** during the lamination the electrically conductive substrate (1) is removed from at least one layer (3) of polymeric nanofibers.

7. The method according to claim 1, 2 or 6, **characterized in that** the electrically conductive substrate (1) is silicone paper or silicone foil.

8. The method according to claim 1 or 2, **characterized in that** the layer (3) of polymeric nanofibers and/or another layer (3) of polymeric nanofibers has a basis weight of 0.01 to 5 g/m².

9. The method according to claim 1 or 2, **characterized in that** the discontinuous layer (2) of the hot melt adhesive on the electrically conductive substrate material (1) has a basis weight of 3 to 15 g/m².

10. The method according to claim 1 or 2, **characterized in that** the electrically non-conductive material is a glass fiber mesh or nonwoven fabric.

11. A multilayer composite containing at least one layer (3) of polymeric nanofibers, **characterized in that** the layer (3) of polymeric nanofibers is deposited on an electrically nonconductive material (4) to which it is attached by means of point and/or planar and/or linear formations and/or fibers of hot melt adhesive, whereby on its opposite surface it is covered by an electrically conductive substrate material (1), which is removably deposited on it.

12. The multilayer composite according to claim 11, **characterized in that** on the opposite surface of the electrically nonconductive material (4) is deposited another layer (3) of polymeric nanofibers, which is attached to it by means of point and/or planar and/or linear formations and/or fibers of hot melt adhesive.

13. The multilayer composite according to claim 11 or 12, **characterized in that** another layer (3) of polymeric nanofibers is on its opposite surface covered by an electrically conductive substrate material (1), which is removably deposited on it.

14. The multilayer composite according to any of claims 11 to 13, **characterized in that** the electrically conductive substrate material (1) is silicone paper or silicone foil.

15. The multilayer composite according to any of claims 11 to 13, **characterized in that** the electrically nonconductive material is a glass fiber mesh or nonwoven fabric.

## Patentansprüche

1. Verfahren zur Lagerung einer Schicht (3) von Polymernanofasern, die durch ein elektrostatisches Verspinnen einer Lösung oder einer Schmelze eines Polymers vorbereitet werden, auf elektrisch leitunfähige Materialien (4), **dadurch gekennzeichnet, dass** eine Schicht (3) von Polymernanofasern beim elektrostatischen Verspinnen einer Lösung oder einer Schmelze eines Polymers auf eine nicht zusammenhängende Schicht (2) eines Schmelzbindemittels mit einem Flächengewicht von 2 bis 30 g/m² gelagert wird, die auf einem elektrisch leitfähigen Unterlegmaterial (1) gelagert ist, und danach mit einem elektrisch leitunfähigen Material (4) überdeckt wird, wonach ein so gebildeter Komposit unter dem Druck von 10 bis 15 N/cm² und unter einer erhöhten Temperatur laminiert wird, die höher als die Temperatur der Erweichung eines Schmelzbindemittels und zugleich niedriger als die Temperatur der Erweichung von Polymernanofasern ist, wobei das Schmelzbindemittel während der Laminierung in einen plastischen oder flüssigen Zustand überführt wird und über die ganze Stärke der Schicht (3) von Polymernanofasern auf die Oberfläche und/oder in die innere Struktur eines elektrisch leitunfähigen Materials (4) eindringt und nach seinem Erstarren die Schicht (3) von Polymernanofasern mit diesem elektrisch leitunfähigen Material (4) verbindet und die Schicht (3) von Polymernanofasern zugleich verfestigt.

2. Verfahren nach dem Anspruch 1, **dadurch gekennzeichnet, dass** vor oder nach einer Laminierung auf eine umgekehrte Oberfläche eines elektrisch leitunfähigen Materials (4), als auf die die erste Schicht (3) von Polymernanofasern gelagert wurde, eine weitere Schicht (3) von Polymernanofasern gelagert wird, die auf einer nicht zusammenhängenden Schicht (2) eines Schmelzbindemittels mit einem Flächengewicht von 2 bis 30 g/m² gelagert wird, die auf einem elektrisch leitfähigen Unterlegmaterial (1) gelagert ist, wonach ein so gebildeter Komposit unter einem Druck von 10 bis 15 N/cm² und unter einer erhöhten Temperatur laminiert wird, die höher als die Temperatur der Erweichung eines Schmelzbindemittels und zugleich niedriger als die Temperatur der Erweichung von Polymernanofasern in beiden Schichten (3) von Polymernanofasern ist.

3. Verfahren nach dem Anspruch 1 oder 2, **dadurch gekennzeichnet, dass** ein Schmelzbindemittel auf einem elektrisch leitfähigen Unterlegmaterial (1) im Voraus gelagert wird oder darauf in Form eines regelmäßigen oder unregelmäßigen Netzes von punktförmigen und/oder linearen Gebilden und/oder Flächengebilden und/oder Fasern gelagert wird.

4. Verfahren nach dem Anspruch 2 oder 3, **dadurch gekennzeichnet, dass** eine Schicht (3) von Polymernanofasern auf eine nicht zusammenhängende Schicht (2) eines Schmelzbindemittels erst nach seinem Erstarren gelagert wird.

5. Verfahren nach dem Anspruch 2 oder 3, **dadurch gekennzeichnet, dass** eine Schicht (3) von Polymernanofasern auf eine nicht zusammenhängende Schicht (2) eines Schmelzbindemittels vor seinem Erstarren gelagert wird.

6. Verfahren nach dem Anspruch 1 oder 2, **dadurch gekennzeichnet, dass** eine elektrisch leitfähige Unterlage (1) während der Laminierung von mindestens einer Schicht (3) von Polymernanofasern beseitigt wird.

7. Verfahren nach dem Anspruch 1, 2 oder 6, **dadurch gekennzeichnet, dass** eine elektrisch leitfähige Unterlage (1) ein Silikonpapier oder eine Silikonfolie ist.

8. Verfahren nach dem Anspruch 1 oder 2, **dadurch gekennzeichnet, dass** eine Schicht (3) von Polymernanofasern und/oder eine weitere Schicht (3) von Polymernanofasern ein Flächengewicht von 0,01 bis 5 g/m² aufweist.

9. Verfahren nach dem Anspruch 1 oder 2, **dadurch gekennzeichnet, dass** eine nicht zusammenhängende Schicht (2) eines Schmelzbindemittels auf einem elektrisch leitfähigen Unterlegmaterial (1) ein Flächengewicht von 3 bis 15 g/m² aufweist.

10. Verfahren nach dem Anspruch 1 oder 2, **dadurch gekennzeichnet, dass** ein elektrisch leitunfähiges Material ein Netz aus Glasfasern oder ein Textilverbundstoff ist.

11. Mehrschichtiger Komposit, der mindestens eine Schicht (3) von Polymernanofasern aufweist, **dadurch gekennzeichnet, dass** eine Schicht (3) von Polymernanofasern auf einem elektrisch leitunfähigen Material (4) gelagert wird, mit dem sie mittels der punktförmigen und/oder flächigen und/oder linearen Gebilden und/oder Fasern eines Schmelzbindemittels verbunden ist, wobei sie auf ihrer umgekehrten Oberfläche mit einem elektrisch leitfähigen Unterlegmaterial (1) überdeckt ist, das darauf abnehmbar gelagert ist.

12. Mehrschichtiger Komposit nach dem Anspruch 11, **dadurch gekennzeichnet, dass** auf der umgekehrten Oberfläche eines elektrisch leitunfähigen Materials (4) eine weitere Schicht (3) von Polymernanofasern gelagert ist, die damit mittels der punktförmigen und/oder flächigen und/oder linearen Gebilden und/oder Fasern eines Schmelzbindemittels verbunden ist.

13. Mehrschichtiger Komposit nach dem Anspruch 11 oder 12, **dadurch gekennzeichnet, dass** eine weitere Schicht (3) von Polymernanofasern auf ihrer umgekehrten Oberfläche mit einem elektrisch leitfähigen Unterlegmaterial (1) überdeckt ist, das darauf abnehmbar gelagert ist.

14. Mehrschichtiger Komposit nach einem der Ansprüche 11 bis 13, **dadurch gekennzeichnet, dass** ein elektrisch leitfähiges Unterlegmaterial (1) ein Silikonpapier oder eine Silikonfolie ist.

15. Mehrschichtiger Komposit nach einem der Ansprüche 11 bis 13, **dadurch gekennzeichnet, dass** ein elektrisch leitunfähiges Material ein Netz aus Glasfasern oder Textilverbundstoff ist.

## Revendications

1. Procédé de dépôt d'une couche (3) de nanofibres polymères préparées à l'aide du filage électrostatique d'une solution ou d'une masse de polymère en fusion pour donner des matériaux isolants (4), **caractérisé en ce que** la couche (3) de nanofibres polymères est, pendant le filage électrostatique de la solution ou de la masse de polymère, posée sur une couche discontinue (2) de liant thermofusible avec masse surfacique de 2 à 30 g/m² posée sur un matériau conducteur électrique de fond (1), pour ensuite être recouverte de matériau isolant (4), après quoi le composite ainsi fabriqué est plastifié sous pression de 10 à 15 N/cm² et température élevée, qui est plus élevée que la température de ramollissement de liant thermofusible et en même temps plus bas que la température de ramollissement des nanofibres polymères, tandis que le liant thermofusible est, lors de la plastification, transformé en état plastique ou liquide et traverse toute l'épaisseur de la couche (3) des nanofibres polymères jusqu'à la surface et/ou la structure intérieure du matériau isolant (4) et après son durcissement lie la couche (3) de nanofibres polymères au matériau isolant (4) et en même temps solidifie la couche (3) de nanofibres polymères.

2. Procédé selon la revendication 1, **caractérisé en ce que** avant ou après la plastification est posée sur la surface du matériau isolant (4), opposée à la surface sur laquelle est posée la première couche (3) de nanofibres polymères, une nouvelle couche (3) de nanofibres polymères qui est posée sur une couche discontinue (2) de liant thermofusible avec masse surfacique de 2 à 30 g/m² posée sur un matériau conducteur électrique de fond (1), après quoi le composite ainsi créé est plastifié sous pression de 10 à 15 N/cm² avec une température élevée, qui est plus élevée que la température de ramollissement du liant thermofusible et en même temps plus basse que la température de ramollissement de nanofibres polymères dans les deux couches (3) de nanofibres polymères.

3. Procédé selon la revendication 1 ou 2, **caractérisé en ce que** le liant thermofusible est posé sur un matériau conducteur électrique de fond (1) à l'avance ou sous forme d'un filet régulier ou irrégulier de formations et/ou de fibres ponctuels et/ou linéaires et/ou superficiels.

4. Procédé selon la revendication 2 ou 3, **caractérisé en ce que** la couche (3) de nanofibres polymères et posée sur la couche discontinue (2) de liant thermofusible après le durcissement de celui-ci.

5. Procédé selon la revendication 2 ou 3, **caractérisé en ce que** la couche (3) de nanofibres polymères est posée sur la couche discontinue (2) de liant thermofusible avant le durcissement de celui-ci.

6. Procédé selon la revendication 1 ou 2, **caractérisé en ce que** la couche de base qui est un conducteur électrique (1) est, lors de la plastification, retirée d'au moins une couche (3) de nanofibres polymères.

7. Procédé selon la revendication 1, 2 ou 6, **caractérisé en ce que** la couche de base qui est un conducteur électrique (1) est un papier siliconé ou une feuille siliconée.

8. Procédé selon la revendication 1 ou 2, **caractérisé en ce que** la couche (3) de nanofibres polymères et/ou une nouvelle couche (3) de nanofibres polymères est d'une masse surfacique de 0,01 à 5 g/m².

9. Procédé selon la revendication 1 ou 2, **caractérisé en ce que** la masse surfacique de la couche discontinue (2) de liant thermofusible sur un matériau de fond qui est un conducteur électrique (1) est de 3 à 15 g/m².

10. Procédé selon la revendication 1 ou 2, **caractérisé en ce que** le matériau isolant électrique est un filet de fibres de verre ou de tissu non-tissé.

11. Composite multicouche qui contient au moins une couche (3) de nanofibres polymères, **caractérisé en ce que** la couche (3) de nanofibres polymères est posée sur le matériau isolant (4), avec lequel elle est liée à l'aide de formations et/ou de fibres de liant thermofusible ponctuels et/ou superficiels et/ou linéaires, tandis que sur sa surface opposée est recouverte de matériau conducteur électrique de fond (1) qui est posé sur celle-ci de manière détachable.

12. Composite multicouche selon la revendication 11, **caractérisé en ce que** sur la surface opposée du matériau isolant (4) est posée une autre couche (3) de nanofibres polymères qui est liée avec celui-ci à l'aide de formations et/ou de fibres de liant thermofusible ponctuels et/ou superficiels et/ou linéaires.

13. Composite multicouche selon la revendication 11 ou 12, **caractérisé en ce que** la nouvelle couche (3) de nanofibres polymères est, sur sa surface opposée, recouverte de matériau conducteur électrique de fond (1) qui est posé sur celle-ci de manière détachable.

14. Composite multicouche selon l'une des revendications 11 à 13, **caractérisé en ce que** le matériau conducteur électrique de fond (1) est un papier siliconé ou une feuille siliconée.

15. Composite multicouche selon l'une des revendications 11 à 13, **caractérisé en ce que** le matériau isolant est un filet de fibres de verre ou un tissu non-tissé.
